# EUROPÄISCHE PATENTANMELDUNG

(11) **EP 2 962 868 A1**
(43) Veröffentlichungstag der Anmeldung: **06.01.2016**
(21) Anmeldenummer: 15173751.7
(22) Anmeldetag: 25.06.2015
(51) Int. Cl.: B60B 39/04

(54) **SANDNACHFÜLLBEHÄLTER FÜR EINE SANDSTREUANLAGE FÜR FAHRZEUGE SOWIE VERFAHREN ZUM& xA;NACHBEFÜLLEN DER SANDSTREUANLAGE**

(30) Priorität: 04.07.2014 DE 102014213018
(71) Anmelder: Bombardier Transportation GmbH, 10785 Berlin (DE)
(72) Erfinder: Poisinger, Josef, 1210 Wien (AT); Monarth, Andreas, 1090 Wien (AT); Böchzelt, Christian, 2261 Angern an der March (AT); Fischer, Michael, 1210 Wien (AT)
(74) Vertreter: Patentanwälte Bressel und Partner mbB

(57) **Zusammenfassung**

Die Erfindung betrifft einen Sandnachfüllbehälter für eine Sandstreuanlage für Fahrzeuge sowie ein Verfahren zur Nachbefüllung der Sandstreuanlage gemäß den Oberbegriffen der Ansprüche 1 und 7, wobei die Sandstreuanlage (2) für Fahrzeuge wenigstens eine Sandungsbox (2.1) und einem Sandauslauf (2.2) mit einer Sandleitung (2.3) zum Transportieren von Sand aus der wenigstens einen Sandungsbox (2.1) zu einer Streustelle umfasst und die Sandungsbox (2.1) dicht mit einem Sandnachfüllbehälter (1) verbindbar ist und wobei der Sandnachfüllbehälter (1)
mit einer trichterförmigen Ausbringung (1.1), einem rohrförmigen Auslauf (1.2) mit Schieberverschluss (1.3) und einem dichten Verschluss (1.4) zur Verbindung mit einer Sandungsbox (2.1) der Sandstreuanlage (2) versehen ist.

## Beschreibung

Die Erfindung betrifft einen Sandnachfüllbehälter für eine Sandstreuanlage für Fahrzeuge sowie ein Verfahren zur Nachbefüllung der Sandstreuanlage gemäß den Oberbegriffen der Ansprüche 1, 8 und 13.

Sandstreuvorrichtungen bzw. Anlagen der betreffenden Art sind bekannt und dienen zum bedarfsweisen Ausbringen von Sand insbesondere bei Schienenfahrzeugen und Bussen zur Erhöhung der Haftung der Räder auf glattem Untergrund zwecks Verbesserung der Bremswirkung.

Gemeinhin werden solche Anlagen als Sandstreuvorrichtungen oder -anlagen bezeichnet. Mit derartigen Vorrichtungen können aber natürlich auch beliebige andere zur Erzielung der gewünschten Wirkung geeignete Streugüter eingesetzt werden. Wenn also in dieser Anmeldung dem üblichen Sprachgebrauch folgend stets nur von Sand bzw. von Sandstreuvorrichtung oder -anlage gesprochen wird, so ist hierin keine Beschränkung auf Sand als Streugut zu sehen.

Die bekannten Sandstreuvorrichtungen umfassen stets einen Sandbehälter und lassen sich in sogenannte offene und geschlossene Systeme unterscheiden, je nachdem, ob der Sandbehälter im Betrieb unter Druck gesetzt wird oder nicht. Bei offenen Systemen gelangt der Sand in der Regel unter Schwerkrafteinfluss oder über ein Venturidüsensystem aus dem Sandbehälter in einen Sandauslauf mit einer Sandleitung, in welcher er mittels Druckluft zu einer Sandstreustelle befördert wird. Solche offenen Systeme sind z.B. aus den Druckschriften DE 42 38 049 A1, DE 44 29 370 A1 und DE 100 44 608 A1 bekannt.

Die DE 202 00 997 U1 offenbart eine Sandstreuvorrichtung für Fahrzeuge gemäß dem Oberbegriff von Anspruch 1. Die Sandstreuvorrichtung weist einen Sandbehälter und einen Sandauslauf mit einer Sandleitung zum Transportieren von Sand aus dem Sandbehälter zu einer Sandstreustelle auf, wobei der Sandbehälter als Wechselbehälter ausgebildet ist. Aus der DE 200 04 641 U1 ist eine Befüllungseinrichtung für Sandvorratsbehälter innerhalb eines Fahrzeuges, insbesondere eines Schienenfahrzeuges bekannt. Ein Sandvorratsbehälter im Sinne der vorliegenden Erfindung ist daraus nicht bekannt.

Allerdings gestaltet sich das Befüllen von Sandbehältern erstaunlich aufwendig. Für die Befüllung werden in der Regel Klappenöffnungen an der Fahrzeugaußenhaut angebracht, durch welche die Sandbehälter befüllt werden können. Zusätzlich bestehen häufig Befüllmöglichkeiten der Sandbehälter im Innenraum des Fahrzeuges, welche oft schwer zu erreichen oder aufwendig zu öffnen sind, weil z.B. Sitze abmontiert werden müssen. Damit die Sandbehälter befüllt werden können, sind komplizierte und teure Befülleinrichtungen notwendig, die nur an wenigen Wartungsstationen vorhanden sind, so dass ein Fahrzeug diese extra anfahren muss.

Bei der Befüllung kommt es oft auch zu einer erheblichen Staub- und Schmutzbelastung. Insbesondere wenn die Befüllung im Fahrzeuginneren stattfindet, ist eine Reinigung des Fahrzeuginneren notwendig.

Der Erfindung liegt die Aufgabe zugrunde, das Nachfüllen von Sand insbesondere bei offenen Systemen einfacher, sauberer und kostengünstiger zu gestalten.

Die Aufgabe wird gelöst von einem Sandnachfüllbehälter nach den Merkmalen des Anspruchs 1, sowie einem Verfahren nach den Merkmalen des Anspruchs 7. Vorteilhafte Ausgestaltungen und Weiterbildungen sind Gegenstand der jeweiligen Unteransprüche.

Demgemäß besteht die Erfindung in der Entwicklung eines Sandnachfüllbehälters für eine Sandstreuanlage für Fahrzeuge, die wenigstens eine Sandungsbox und einen Sandauslauf mit einer Sandleitung zum Transportieren von Sand aus der wenigstens einen Sandungsbox zu einer Streustelle umfasst, wobei die Sandungsbox dicht mit dem Sandnachfüllbehälter verbindbar ist. Vorteilhaft ist dabei vorgesehen, dass der Sandnachfüllbehälter eine trichterförmige Ausbringung, einen rohrförmigen Auslauf mit Schieberverschluss und einen dichten Verschluss aufweist. Nach einem besonderen Merkmal ist die Sandungsbox über eine in der Sandungsbox vorgesehene Öffnung zur Nachbefüllung mit Sand mit dem Sandnachfüllbehälter verbindbar. Nach einem weiteren Merkmal ist alternativ vorgesehen, dass die Sandungsbox mit dem Sandnachfüllbehälter über eine schlauch- oder rohrförmige Verbindung mittels Verschluss verbindbar ist, vorzugsweise kann dies als Bajonettverschluss oder anderen beispielsweise rastenden Verschlusssystemen ausgestattet werden. Vorzugsweise ist der Sandnachfüllbehälter als Mehrzweckbehälter aus Kunststoff oder Metall ausgebildet. Nach einem besonderen Merkmal ist der Schieberverschluss des Sandnachfüllbehälters eine im rohrförmigen Auslauf verschiebbar angeordnete Kunststoff- oder Metallplatte.

Vorteilhaft ist nach einem anderen Merkmal vorgesehen, dass der Sandnachfüllbehälter einen ebenen Boden und Griffe aufweist. Vorteilhaft ist dadurch eine einfache Befüllung des Nachfüllbehälters möglich, der einfach auf den ebenen Boden gestellt werden kann und durch Öffnen des Verschlusses und es Schiebers über das Austragsrohr nachbefüllbar ist. Zum Umfang der Erfindung gehört auch ein Sandnachfüllbehälter für eine Sandstreuanlage für Fahrzeuge mit einer trichterförmige Ausbringung, einem rohrförmigen Auslauf mit Schieberverschluss und einem dichten Verschluss zur Verbindung mit einer Sandungsbox der Sandstreuanlage, wobei die Merkmale des Sandnachfüllbehälters aus der o.g. Beschreibung bereits hervorgehen, was auch für das Verfahren zur Nachbefüllung der Sandstreuanlage zutrifft.

Die Erfindung hat den Vorteil, dass spezielle Befülleinrichtungen für Fahrzeuge nicht mehr notwendig sind. Die Fahrzeuge müssen nicht mehr zu einem Ort, der mit einer Befülleinrichtung ausgestattet ist, gefahren werden. Außerdem wird die Staub- und Schmutzbelastung bei der Befüllung, insbesondere wenn diese vom Fahrzeuginneren stattfindet, erheblich gesenkt.

Zudem erlaubt es die Erfindung, durch leichte Modifikationen und Nachrüsten entsprechender Sandnachfüllbehälter auch bestehende Sandstreuvorrichtungen mittels wechselbarer Sandnachfüllbehälter nachfüllbar zu machen, so dass damit ausgerüstete Fahrzeuge nicht mehr aufwendig zwecks Sandnachfüllung in Wartungshallen gefahren werden müssen.

Weitere Einzelheiten und Vorteile der Erfindung ergeben sich aus der nachfolgenden rein beispielhaften und nicht-beschränkenden Beschreibung eines Ausführungsbeispiels in Verbindung mit der Zeichnung. Es zeigen:
- Fig. 1: eine stark schematisierte Seitenansicht einer erfindungsgemäßen Sandstreuanlage mit einem mit der Sandungsbox verbundenen Sandnachfüllbehälter zur Nachbefüllung der Sandstreuanlage, und
- Fig. 2: eine schematisierte Darstellung eines Sandnachfüllbehälters.

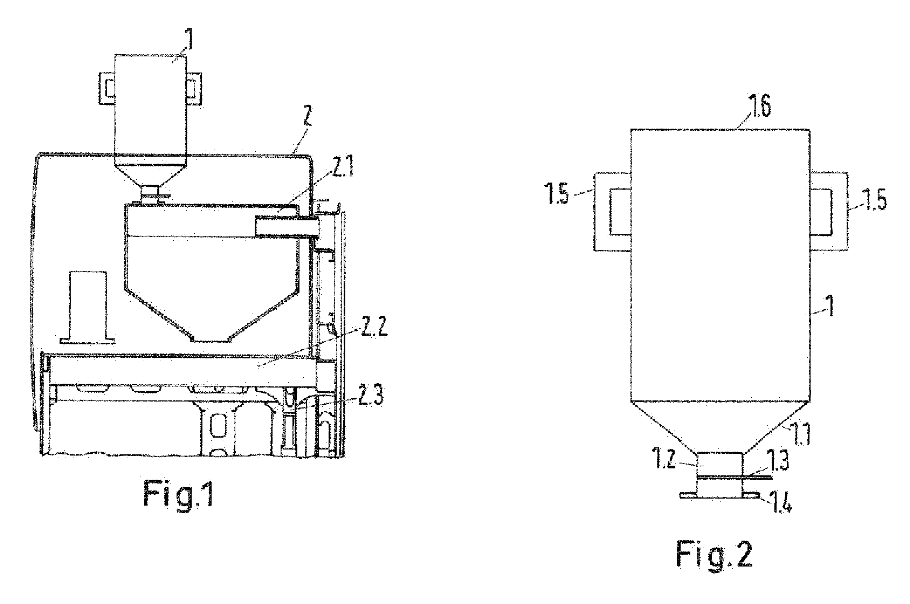

Die Fig. 1 zeigt stark schematisiert den prinzipiellen Aufbau einer erfindungsgemäßen Sandstreuanlage 2 mit einer Sandungsbox 2.1,und einem Sandauslauf 2.2 mit einer Sandleitung 2.3 zum Transportieren von Sand aus der Sandungsbox 2.1 zu einer Sandstreustelle.

Die Sandungsbox 2.1 verfügt über eine mit einem Verschluss versehene Öffnung, die zur Verbindung mit einem Sandnachfüllbehälter 1 vorgesehen ist. Die Verbindung kann als Bajonettverbindung ausgeführt werden. Auch Verbindungsmittel wie z.B. Schnappverschlüsse, Spannriemen und dergleichen können zum Fixieren des Sandnachfüllbehälters vorgesehen werden. Damit der Sand aus dem Sandnachfüllbehälter 1 austreten kann, weist dieser eine trichterförmige Ausbringung 1.1, einen rohrförmigen Auslauf 1.2 mit einer Sandaustrittsöffnung auf sowie einen Schieberverschluss 1.3 und einen Bajonettverschluss 1.4 zur Kopplung mit der Sandungsbox 2.1 der Sandstreuanlage 2. Die Sandungsbox 2.1 kann mit dem Sandnachfüllbehälter 1 alternativ auch über eine schlauch- oder rohrförmige Verbindung mittels Bajonettverschluss verbunden werden, falls keine direkte Verbindung der beiden Behälter möglich ist (nicht dargestellt).

Nach Einsetzen des Sandnachfüllbehälters 1 in die Öffnung der Sandungsbox 2.1 wird der Schieberverschluss 1.3 geöffnet, sodass Sand bzw. Streumittel austreten kann. Alternativ zum Öffnen des Schiebers kann auch ein anderer dichter Verschluss zerstörend durch das Aufsetzen durchstoßen werden. Der Schieberverschluss 1.3 des Sandnachfüllbehälters 1 ist vorzugsweise als eine im rohrförmigen Auslauf 1.2 verschiebbar angeordnete Kunststoff- oder Metallplatte ausgebildet. Der Sandnachfüllbehälter 1 ist als Mehrwegbehälter ausgestaltet, wobei diese vorzugsweise aus Metall oder stabilem Kunststoff gefertigt sind.

Der Sandnachfüllbehälter weist beispielsweise ein Fassungsvermögen von ca. 10l auf und ist etwa 30 cm hoch bei einem Durchmesser von ca. 20 cm. Ein Behälter mit einem solchen Fassungsvermögen kann leicht von einer einzigen Person getauscht werden. Es sind aber auch andere Geometrien und Füllvolumina denkbar.

Zur leichteren Handhabung des Behälters sind Griffe vorgesehen, mit welchen der Behälter getragen und gehoben werden kann. Außerdem wird dadurch die Aufbringung des Behälters auf die Sandungsbox der Sandstreuanlage erleichtert. Dieses Prinzip kann für das Nachfüllen einer Sandungsbox in der in Fig.1 gezeigten Position verwendet werden aber auch, wenn sich die Sandungsbox in der Seitenwand des Fahrzeuges befindet. Die Anschlüsse müssen dann lediglich zueinander drehbar ausgestaltet werden. Die Nachbefüllung des Sandnachfüllbehälters erfolgt einfach durch "Umdrehen", wobei der Behälter auf den ebenen Boden gestellt wird und nach Öffnen des Schieberverschlusses wieder befüllt wird.

Die Erfindung hat den großen Vorteil, dass existierende Sandstreuvorrichtungen relativ leicht nachbefüllt werden können.

Im Rahmen des Erfindungsgedankens sind zahlreiche Abwandlungen und Weiterbildungen möglich. Z.B. kann insbesondere ein metallischer Sandbehälter leicht so ausgestaltet werden, dass er im Betrieb unter Druck gesetzt werden kann, wozu z.B. ein Anschluss an eine Druckluftquelle vorgesehen sein kann, sodass sich auch geschlossene Systeme mit austauschbaren Sandbehältern betreiben und existierende geschlossene Systeme auf den Betrieb mit austauschbaren Sandbehältern umrüsten lassen.

## Patentansprüche

1. Sandnachfüllbehälter für eine Sandstreuanlage für Fahrzeuge, welche wenigstens eine Sandungsbox (2.1) und einen Sandauslauf (2.2) mit einer Sandleitung (2.3) zum Transportieren von Sand aus der wenigstens einen Sandungsbox (2.1) zu einer Streustelle umfasst, **dadurch gekennzeichnet, dass** die Sandungsbox (2.1) mit dem Sandnachfüllbehälter (1) verbindbar ist, wobei der Sandnachfüllbehälter (1) mit einer trichterförmigen Ausbringung (1.1), einem rohrförmigen Auslauf (1.2) mit Schieberverschluss (1.3) und einem dichten Verschluss (1.4) zur Verbindung mit einer Sandungsbox (2.1) der Sandstreuanlage (2) versehen ist.

2. Sandnachfüllbehälter nach Anspruch 1, **dadurch gekennzeichnet, dass** die Sandungsbox (2.1) über eine in der Sandungsbox vorgesehene Öffnung zur Nachbefüllung mit Sand mit dem Sandnachfüllbehälter (1) verbindbar ist.

3. Sandnachfüllbehälter nach den Ansprüchen 1 und 2, **dadurch gekennzeichnet, dass** dieser über eine schlauch- oder rohrförmige Verbindung mit einem dichten Verschluss mit der Sandstreuanlage verbindbar ist.

4. Sandnachfüllbehälter nach den Ansprüchen 1 bis 3 , **dadurch gekennzeichnet, dass** dieser als Mehrzweckbehälter aus Kunststoff oder Metall ausgebildet ist.

5. Sandnachfüllbehälter nach den Ansprüchen 1 bis 4 , **dadurch gekennzeichnet, dass** dieser einen ebenen Boden (1.6) und Griffe (1.5) aufweist.

6. Sandnachfüllbehälter nach einem der Ansprüche 1 bis 5, **dadurch gekennzeichnet, dass** der Schieberverschluss (1.3) des Sandnachfüllbehälters (1) eine im rohrförmigen Auslauf verschiebbar angeordnete Kunststoff- oder Metallplatte ist.

7. Verfahren zum Nachbefüllen einer Sandstreuanlage (2) für Fahrzeuge, die wenigstens eine Sandungsbox (2.1) und einen Sandauslauf (2.2) mit einer Sandleitung (2.3) zum Transportieren von Sand aus der wenigstens einen Sandungsbox (2.1) zu einer Streustelle umfasst,
**dadurch gekennzeichnet, dass**
die Sandungsbox (2.1) über eine in der Sandungsbox vorgesehene Öffnung zur Nachbefüllung mit Sand, dicht mit einem Sandnachfüllbehälter (1) verbunden wird, wobei der Sandnachfüllbehälter (1) eine trichterförmige Ausbringung (1.1), einen rohrförmigen Auslauf (1.2) mit Schieberverschluss (1.3) und einen dichten Verschluss (1.4) aufweist, über welchen die Verbindung zur Nachbefüllung der Sandungsbox (2.1) hergestellt wird, wobei die Belüftung des Nachfüllbehälters (1) über die Sandungsbox (2.1) erfolgt.

8. Verfahren nach Anspruch 7, **dadurch gekennzeichnet, dass** die Sandungsbox mit dem Sandnachfüllbehälter über eine schlauch- oder rohrförmige Verbindung mit einem dichten Verschluss verbunden wird.

9. Verfahren nach einem der Ansprüche 7 und 8, **dadurch gekennzeichnet, dass** der Sandnachfüllbehälter als Mehrzweckbehälter aus Kunststoff oder Metall ausgebildet ist.

10. Verfahren nach einem der Ansprüche 8 bis 9, **dadurch gekennzeichnet, dass** der Sandnachfüllbehälter (1) einen ebenen Boden (1.6) und Griffe (1.5) aufweist und die Beladung des Sandnachfüllbehälters (1) über den rohrförmigen Auslauf (1.2) mit Schieberverschluss (1.3) nach Öffnung des Schieberverschlusses (1.3) erfolgt.

11. Verfahren nach einem der Ansprüche 7 bis 10, **dadurch gekennzeichnet, dass** der Schieberverschluss (1.3) des Sandnachfüllbehälters (1) eine im rohrförmigen Auslauf (1.2) verschiebbar angeordnete Kunststoff- oder Metallplatte ist.

12. Verfahren nach einem der Ansprüche 7 bis 11, **dadurch gekennzeichnet, dass** die Nachbefüllung der Sandungsbox (2.1) durch Schwerkraft nach Öffnung des Schieberverschlusses erfolgt.
